# EUROPEAN PATENT SPECIFICATION

(11) **EP 4 035 533 B1**
(45) Date of publication and mention of the grant of the patent: **29.11.2023**
(21) Application number: 22152687.4
(22) Date of filing: 21.01.2022
(51) Int. Cl.: A21B 7/00

(54) **BREAD MAKER**
BROTBACKMASCHINE
MACHINE À PAIN

(30) Priority: 29.01.2021 JP 2021013094
(43) Date of publication of application: 03.08.2022
(73) Proprietor: Panasonic Intellectual Property Management Co., Ltd., Osaka-shi, Osaka 540-6207 (JP)
(72) Inventor: Otsuki, Kazuya, Osaka-shi, Osaka (JP); Nakayama, Atsuo, Osaka-shi, Osaka (JP)
(74) Representative: Grünecker Patent- und Rechtsanwälte PartG mbB

(56) References cited:
- JP-A- 2013 253 724
- JP-B2- 6 102 240
- US-A1- 2013 000 491

## Description

### 1. Technical Field

The present disclosure relates to a bread maker that contains auxiliary ingredients in the bread maker.

### 2. Description of the Related Art

PTL 1 discloses a bread maker that makes a bread by feeding auxiliary ingredients such as raisins.

The bread maker of PTL 1 include a body lid provided with a large container that stores an auxiliary ingredient of a bread requiring a relatively large volume, such as raisins or nuts, and a small container that stores an auxiliary ingredient of a bread having a relatively small volume, such as yeast and spice that are each powder or in a granular shape. The bread maker of PTL 1 also includes a feeder that individually opens bottom members of the large container and the small container to feed any auxiliary ingredients of a bread into a container.

### Citation List

### Patent Literature

PTL 1: Unexamined Japanese Patent Publication No. JP 2005-13387 A

Further prior art is known from documents JP 6 102 240 B2, JP 2013 253 724 A and US 2013/000 491 A1.

### SUMMARY

Unfortunately, the bread maker described in PTL 1 still has room for improvement in terms of ensuring safety when a component is damaged.

Thus, the present disclosure has an object to provide a bread maker that is capable of ensuring safety when a component is damaged.

A bread maker according to an aspect of the present disclosure includes the features of claim 1.

The present disclosure provides a bread maker that is capable of ensuring safety when a component is damaged.

### BRIEF DESCRIPTION OF THE DRAWINGS

Fig. 1 is a schematic perspective view illustrating an example of a structure of a bread maker according to a first exemplary embodiment of the present disclosure;
Fig. 2 is a schematic perspective view illustrating the bread maker of Fig. 1 in which an outer lid is opened;
Fig. 3 is a schematic sectional view illustrating an example of an internal structure of the bread maker of Fig. 1;
Fig. 4 is a schematic perspective view illustrating an example of a structure of an auxiliary-ingredient container according to the first exemplary embodiment of the present disclosure;
Fig. 5 is an exploded perspective view illustrating the structure of the auxiliary-ingredient container of Fig. 4;
Fig. 6 is a schematic plan view illustrating the structure of the auxiliary-ingredient container of Fig. 4;
Fig. 7 is a schematic sectional view of the auxiliary-ingredient container of Fig. 6 taken along line A-A;
Fig. 8 is a schematic sectional view of the auxiliary-ingredient container of Fig. 7 taken along line B-B;
Fig. 9 is a schematic perspective view illustrating an example of a structure of a stopper;
Fig. 10 is a schematic perspective view illustrating an example of a structure of a second cover member;
Fig. 11 is a side view illustrating an example of a structure of an auxiliary-ingredient container in which an opening-closing lid is closed;
Fig. 12 is a schematic sectional view of the auxiliary-ingredient container of Fig. 11 taken along line C-C;
Fig. 13 is a schematic view illustrating an example of a stopper and an opening-closing lid that engage with each other;
Fig. 14 is a schematic view illustrating an example of a structure of an auxiliary-ingredient container in which an opening-closing lid is opened;
Fig. 15 is a schematic sectional view of the auxiliary-ingredient container of Fig. 14 taken along line D-D;
Fig. 16 is a schematic view illustrating an example of a stopper and an opening-closing lid that disengage from each other;
Fig. 17 is a schematic view illustrating an example of a stopper that is damaged;
Fig. 18 is a schematic view illustrating an example of a stopper that is damaged;
Fig. 19 is a schematic view illustrating an example of cracking of a stopper;
Fig. 20 is a schematic view illustrating a structure of an auxiliary-ingredient container of a first modification;
Fig. 21 is a schematic side view illustrating a structure of an auxiliary-ingredient container of a second modification;
Fig. 22 is a schematic sectional view of the auxiliary-ingredient container of Fig. 21 taken along line E-E;
Fig. 23 is a schematic perspective view illustrating a structure of a stopper of the second modification; and
Fig. 24 is a schematic perspective view illustrating a structure of a second cover member of the second modification.

### DETAILED DESCRIPTIONS

### (Background to the present disclosure)

Bread makers are required to make various types of breads. For example, a hard bread and the like are required to be made besides a loaf of the bread. The hard bread requires higher baking temperature than the loaf of the bread, so that output of a heater is increased. When the output of the heater is increased to make various types of breads as described above, components constituting a bread maker are likely to deteriorate over time, and the components may be easily damaged.

For example, the bread maker includes a lid to which an auxiliary-ingredient container for containing auxiliary ingredients such as raisins or nuts is attached. The auxiliary-ingredient container is disposed above a mixing container that kneads and heats cooking ingredients. The auxiliary-ingredient container is provided its bottom with an opening-closing lid that is openable and closable. When the opening-closing lid is opened, the auxiliary ingredients are fed into the mixing container. Opening and closing of the opening-closing lid is mechanically controlled by engagement with a stopper. For example, the stopper engages with the opening-closing lid using a pressing force of a spring to close the opening-closing lid. When the stopper is rotated by being pressed in a direction against the pressing force of the spring by a solenoid having a plunger, for example, the engagement with the opening-closing lid is released to open the opening-closing lid.

The bread maker configured as described above includes the stopper disposed above the mixing container and the heater, so that heat to be transferred to the stopper is likely to increase as the output of the heater increases. For example, when the stopper is formed of a member made of resin or the like, the stopper is more likely to deteriorate over time as temperature increases, and thus the stopper is likely to be damaged. For example, when the stopper is broken due to aging deterioration of the stopper, a cracked part may fall into the auxiliary-ingredient container or the mixing container. As described above, the conventional bread maker has room for improvement in ensuring safety of a consumer using the bread maker when the stopper is damaged.

Thus, the inventors of the present invention have intensively studied to result in finding a structure in which a cover member for preventing a stopper from falling is disposed covering the stopper, and constituting the following subject matter. The object of the invention is solved by the features of independent claim 1.

A bread maker according to the invention includes a device body, a lid, a mixing container, and an auxiliary-ingredient container. The device body is provided inside with a heating chamber and includes a device opening. The lid is attached to the device body to open and close the device opening. The mixing container is accommodated in the heating chamber, and kneads and heats cooking ingredients. The auxiliary-ingredient container contains auxiliary ingredients, and feeds the auxiliary ingredients into the mixing container. The auxiliary-ingredient container includes a container body, an opening-closing lid, a stopper, and one or more cover members. The container body includes a bottom opening. The opening-closing lid opens and closes the bottom opening of the container body. The stopper engages with the opening-closing lid, and is configured to open the bottom opening of the container body by releasing the engagement with the opening-closing lid. The one or more cover members are disposed covering at least one of first and second ends of the stopper.

The bread maker according to the invention is configured such that the one or more cover members include a first cover member that is provided on an inner wall surface of a container side wall of the container body and disposed covering a part of the stopper at a place where the opening-closing lid engages with the part of the stopper.

The bread maker according to an aspect of the present disclosure may be configured such that the opening-closing lid includes an opening-closing lid body in a plate shape having a main surface, and a lid side wall extending from an outer periphery of the opening-closing lid body in a direction intersecting the main surface of the opening-closing lid body. The lid side wall may be provided with a through-hole into which a part of the stopper is inserted. The first cover member may be disposed at a position overlapping the through-hole when viewed from a direction from an inner wall surface toward an outer wall surface of the container side wall.

The bread maker according to an aspect of the present disclosure may be configured such that the first cover member extends above the through-hole not only from the inner wall surface of the container side wall toward a side opposite to a side on which the stopper is disposed, but also toward the opening-closing lid body.

The bread maker according to an aspect of the present disclosure may be configured such that a gap is formed between the first cover member and the opening-closing lid body.

The bread maker according to an aspect of the present disclosure may be configured such that a housing for accommodating the stopper in a rotatable manner is provided on an outer wall surface of the container side wall of the container body. The stopper may include a shaft part, a hook part, and a stopper operating part. The shaft part is disposed between the first and second ends, and is rotatably held in the housing. The hook part extends from the shaft part toward first end of the stopper and engages with the opening-closing lid. The stopper operating part extends from the shaft part toward the second end of the stopper, and is bent from a direction, in which the hook part extends, toward a side opposite to a side where the opening-closing lid is disposed. When the stopper operating part rotates about the shaft part in a first release direction toward the container side wall, the hook part may rotate in a second release direction away from the container side wall to release engagement between the opening-closing lid and the hook part.

The bread maker according to an aspect of the present disclosure may be configured such that the one or more cover members include a second cover member that is disposed close to the outer wall surface of the container side wall to hold the stopper in the housing.

The bread maker according to an aspect of the present disclosure may be configured such that the hook part is provided with a recess with a contact surface on a side opposite to a side where the hook part engages with the opening-closing lid. The second cover member may include a cover rib disposed at a position overlapping the contact surface of the recess when viewed from a direction from the outer wall surface toward the inner wall surface of the container side wall.

The bread maker according to an aspect of the present disclosure may be configured such that the stopper operating part includes a stopper rib extending in a height direction of the stopper operating part, and the second cover member includes a rib contact part disposed at a position overlapping the stopper rib when viewed from the direction from the outer wall surface toward the inner wall surface of the container side wall.

The bread maker according to an aspect of the present disclosure may be configured such that the opening-closing lid is made of metal.

The bread maker according to an aspect of the present disclosure may further include a solenoid with a plunger that moves toward the stopper.

The bread maker according to an aspect of the present disclosure may be configured such that the auxiliary-ingredient container is disposed above the mixing container.

An auxiliary-ingredient container according to an aspect of the present disclosure contains auxiliary ingredients in a bread maker, and includes a container body, an opening-closing lid, a stopper, and one or more cover members. The container body includes a bottom opening. The opening-closing lid opens and closes the bottom opening of the container body. The stopper engages with the opening-closing lid, and is configured to open the bottom opening of the container body by releasing the engagement with the opening-closing lid. The one or more cover members are disposed covering at least one of first and second ends of the stopper.

Hereinafter, exemplary embodiments of the present disclosure will be described with reference to the accompanying drawings.

### (First exemplary embodiment)

### [General structure]

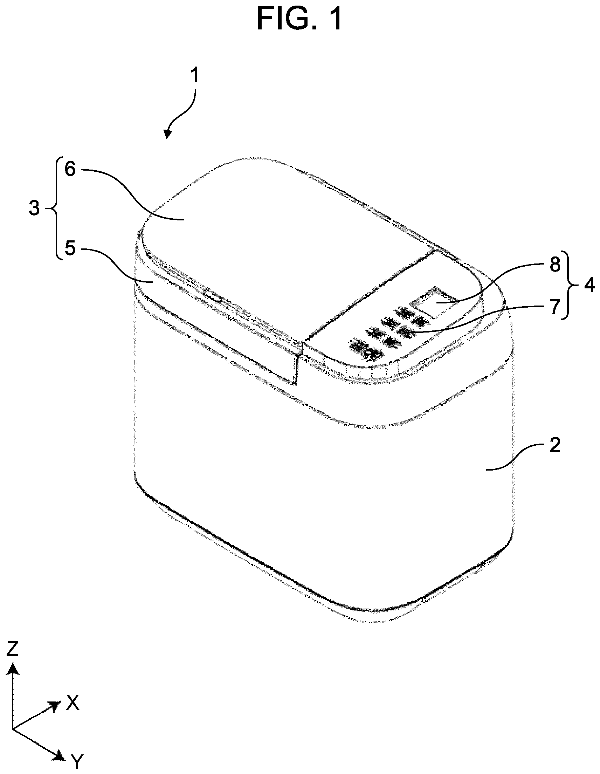

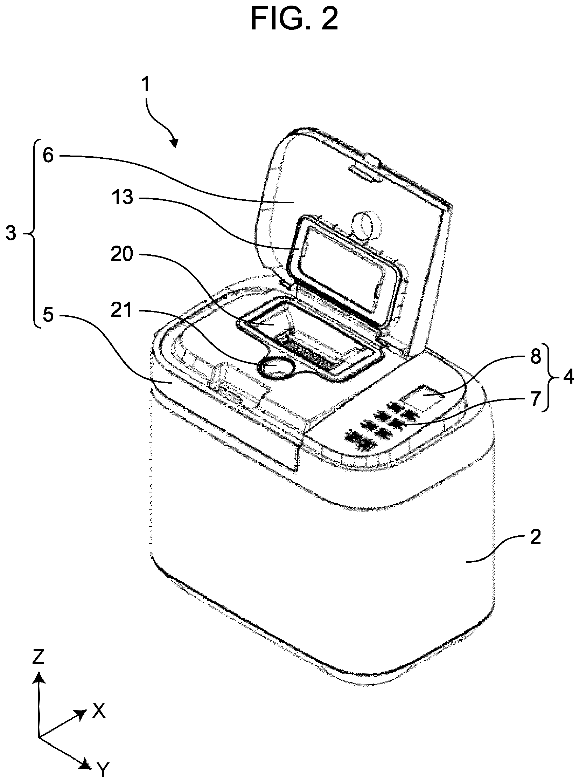

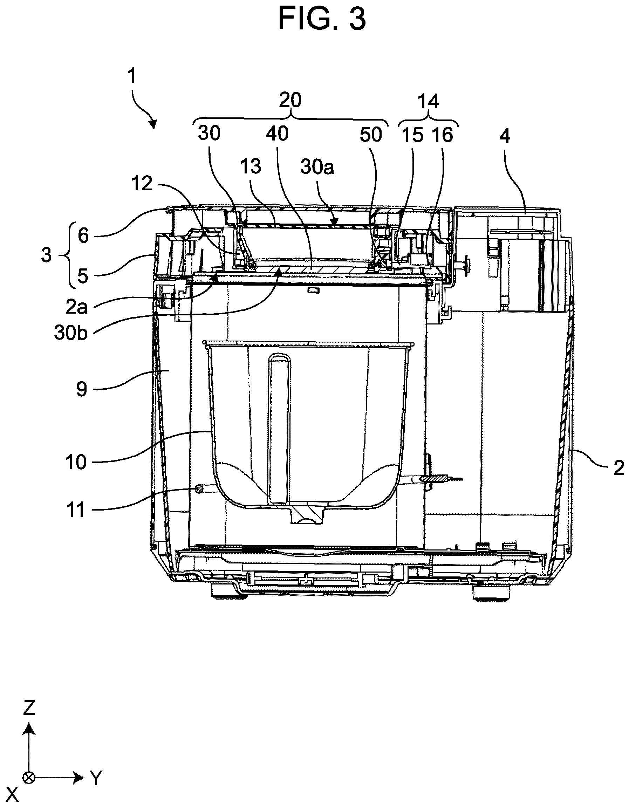

Fig. 1 is a schematic perspective view illustrating an example of a structure of bread maker 1 according to a first exemplary embodiment of the present disclosure. Fig. 2 is a schematic perspective view illustrating bread maker 1 of Fig. 1 in which outer lid 6 is opened. Fig. 3 is a schematic sectional view illustrating an example of an internal structure of bread maker 1 of Fig. 1. The drawings each show X, Y, Z directions that respectively indicate a lateral direction, a longitudinal direction, and a height direction of bread maker 1.

As illustrated in Figs. 1 to 3, bread maker 1 includes device body 2, lid 3, and operation unit 4.

### <Device body>

Device body 2 has a bottomed tubular shape. Device body 2 includes an upper portion provided with device opening 2a. Lid 3 is disposed over device opening 2a. Device body 2 is provided inside with heating chamber 9. Heating chamber 9 accommodates mixing container 10 and heating unit 11.

Mixing container 10 is accommodated in heating chamber 9, and kneads and heats cooking ingredients. Examples of the cooking ingredients include bread dough, cake, and rice cake. Mixing container 10 is detachably accommodated in heating chamber 9. Mixing container 10 has a bottomed tubular shape.

Mixing container 10 is provided inside with a mixer blade for kneading the cooking ingredients, for example, the mixer blade being detachably attached. The mixer blade is driven by, for example, a motor.

Heating unit 11 is accommodated in heating chamber 9 and heats mixing container 10. Heating unit 11 is disposed surrounding a lower part of mixing container 10 with a gap. Heating unit 11 is, for example, a heater. As the heater, for example, an induction heating coil, a planar heater, a sheath heater, or the like can be used. In heating chamber 9, a temperature sensor for detecting a temperature in heating chamber 9 may be disposed.

### <Lid>

Lid 3 is attached to device body 2 to open and close device opening 2a. Specifically, lid 3 is attached to a hinge provided in an upper part of device body 2. Lid 3 rotates about the hinge to open and close device opening 2a of device body 2.

Lid 3 includes lid body 5 and outer lid 6. Lid body 5 is provided with detachably attached auxiliary-ingredient container 20 that contains auxiliary ingredients having a relatively large volume such as raisins and nuts, and auxiliary-ingredient container21 that contains auxiliary ingredients having a relatively small volume such as yeast and spice. Auxiliary-ingredient containers 20, 21 are attached to lid body 5 to feed auxiliary ingredients into mixing container 10. Auxiliary-ingredient container 21 may not be attached to lid body 5.

As illustrated in Fig. 3, lid body 5 is provided with attachment hole 12 into which auxiliary-ingredient containers 20, 21 can be inserted. Auxiliary-ingredient containers 20, 21 are inserted into attachment hole 12 to be attached to lid body 5. Auxiliary-ingredient containers 20, 21 are disposed above mixing container 10. Outer lid 6 is attached to be able to open and close upper opening 30a of auxiliary-ingredient container 20 and an upper opening of auxiliary-ingredient container 21.

Lid body 5 includes opening-closing mechanism 14 that controls opening and closing of upper opening 30a of auxiliary-ingredient container 20. In the first exemplary embodiment, opening-closing mechanism 14 includes solenoid 16 with plunger 15.

Outer lid 6 includes upper lid 13 in a shape corresponding to a shape of upper opening 30a of auxiliary-ingredient container 20. When outer lid 6 is closed, upper lid 13 is disposed over upper opening 30a of auxiliary-ingredient container 20. This allows upper lid 13 to close upper opening 30a of auxiliary-ingredient container 20. In the first exemplary embodiment, upper lid 13 has a substantially rectangular shape.

### <Operation unit>

Operation unit 4 is provided on an upper part of device body 2. Operation unit 4 includes various electronic components. Operation unit 4 includes selector 7 and display unit 8. For example, selector 7 includes a button for selecting a specific cooking course from a plurality of cooking courses, and a button for starting or stopping each main action and setting a timer. For example, display unit 8 displays information on a selected cooking course, time, process, and the like. Display unit 8 is, for example, a display.

Bread maker 1 includes a controller (not illustrated). The controller integrally controls elements of bread maker 1. The controller includes, for example, a memory that stores a control program for causing these elements to function, and a processing circuit corresponding to a processor such as a central processing unit (CPU). Then, the processor may execute the control program to function as a controller that causes these elements to function. Although the control program executed by the processor is to be recorded in advance in the memory, the control program may be provided by being recorded in a non-temporary recording medium such as a memory card, or may be provided through a telecommunication line such as the Internet.

### [Auxiliary-ingredient container]

Next, auxiliary-ingredient container 20 will be described in detail. Auxiliary-ingredient container 20 contains auxiliary ingredients having a relatively large volume such as raisins or nuts. Auxiliary-ingredient container 20 is attached to lid 3 to feed auxiliary ingredients into mixing container 10.

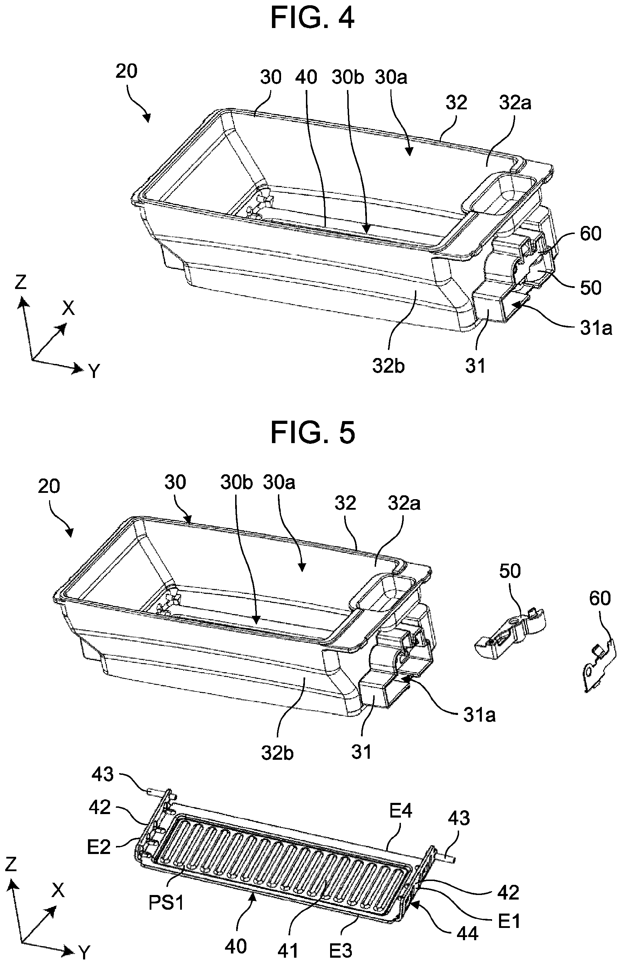

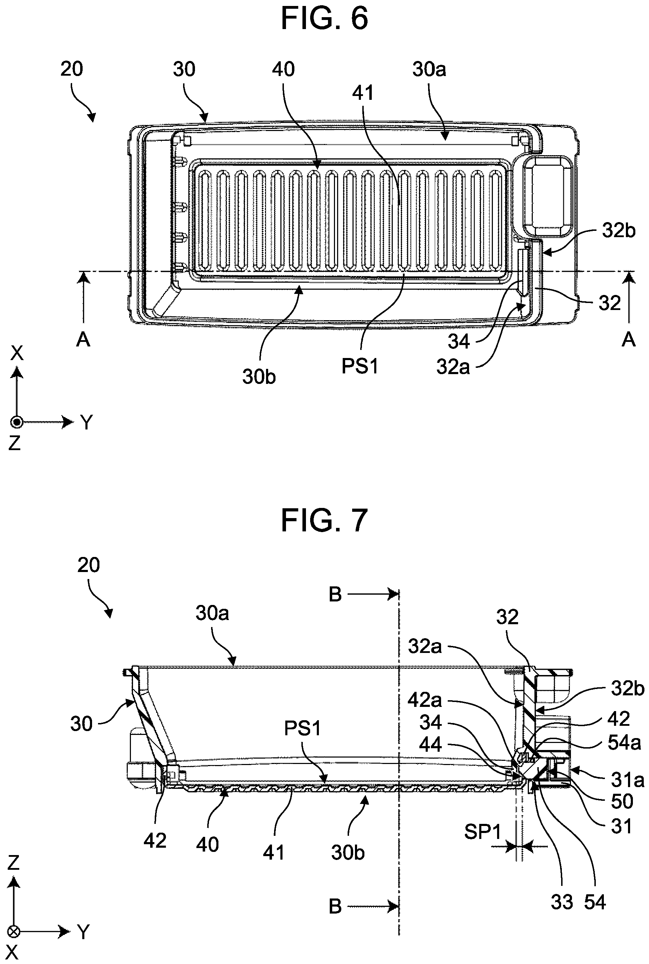

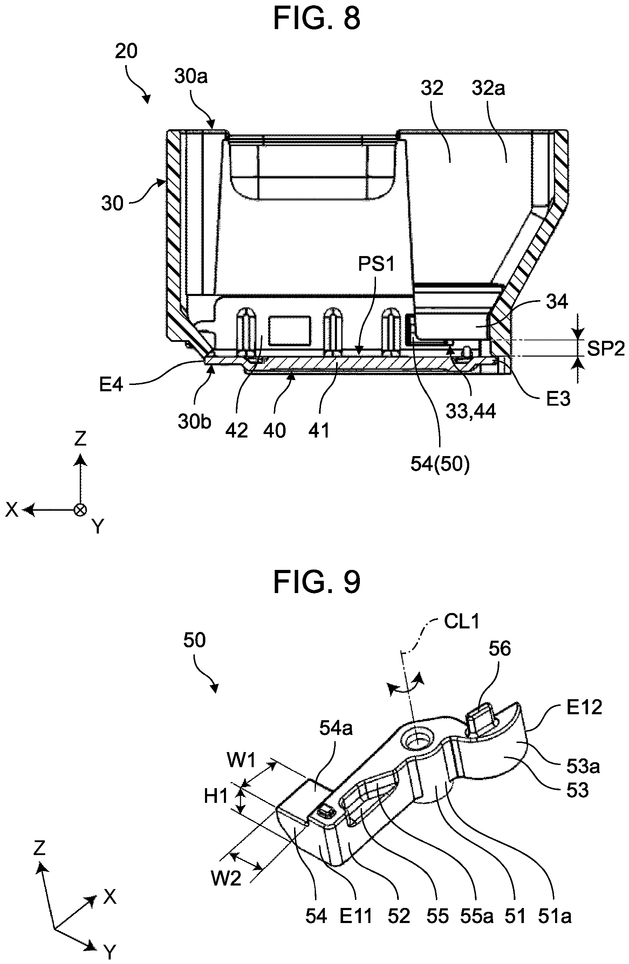

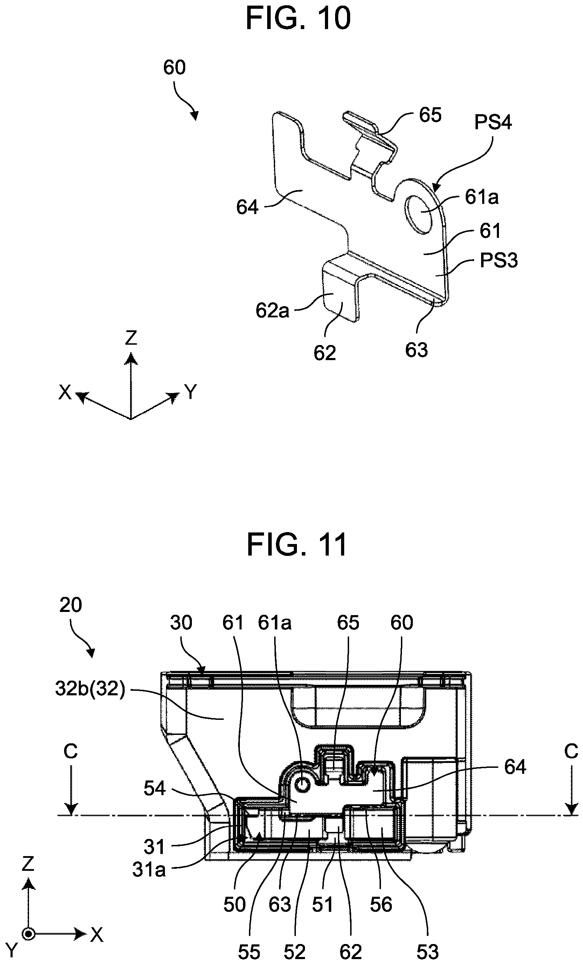

Fig. 4 is a schematic perspective view illustrating an example of a structure of auxiliary-ingredient container 20. Fig. 5 is an exploded perspective view illustrating a structure of auxiliary-ingredient container 20 of Fig. 4. Fig. 6 is a schematic plan view illustrating the structure of auxiliary-ingredient container 20 of Fig. 4. Fig. 7 is a schematic sectional view of auxiliary-ingredient container 20 of Fig. 6 taken along line A-A. Fig. 8 is a schematic sectional view of auxiliary-ingredient container 20 of Fig. 7 taken along line B-B. Fig. 9 is a schematic perspective view illustrating an example of a structure of stopper 50. Fig. 10 is a schematic perspective view illustrating an example of a structure of second cover member 60.

As illustrated in Figs. 4 to 10, auxiliary-ingredient container 20 includes container body 30, opening-closing lid 40, stopper 50, and cover members 34, 60. Cover members 34, 60 are respectively disposed covering first end E11 and second end E12 of stopper 50 to prevent stopper 50 from falling. In the first exemplary embodiment, cover members 34, 60 include first cover member 34 and second cover member 60. First cover member 34 is disposed inside container body 30, and second cover member 60 is disposed outside container body 30. In the first exemplary embodiment, cover members 34, 60 prevent stopper 50 from falling into auxiliary-ingredient container 21 or mixing container 10. First cover member 34 may be referred to as inner cover member 34, and second cover member 60 may be referred to as outer cover member 60.

### <Container body>

As illustrated in Figs. 4 and 5, container body 30 has a tubular shape. Container body 30 includes upper opening 30a and bottom opening 30b. Container body 30 is formed in a rectangular frame shape having a longitudinal direction (Y-direction) and a lateral direction (X-direction) in plan view. The term, "plan view", means a state viewed from a Z-direction. In plan view, bottom opening 30b is smaller than upper opening 30a. Container body 30 is composed of container side wall 32 formed in a frame shape. Container side wall 32 is provided inside with inner wall surface 32a and outside with outer wall surface 32b. Inner wall surface 32a is located opposite to outer wall surface 32b. At least a part of inner wall surface 32a of container side wall 32 of container body 30 is provided with an inclined surface inclined from upper opening 30a toward bottom opening 30b and the inside of container body 30.

Upper lid 13 of outer lid 6 described above is disposed over upper opening 30a of container body 30. Opening-closing lid 40 is disposed over bottom opening 30b of container body 30.

Container side wall 32 of container body 30 is provided with housing 31 that accommodates stopper 50 in a rotatable manner. Housing 31 is provided at an end of container body 30 in the longitudinal direction (Y-direction). Housing 31 is formed in a recessed shape, and a space enough for accommodating stopper 50 is formed inside housing 31. Housing 31 is provided with opening 31a that opens in the longitudinal direction (Y-direction) of container body 30.

As illustrated in Fig. 7, container body 30 is provided with through-hole 33 into which a part (protrusion 54) of stopper 50 is inserted. For example, through-hole 33 has a rectangular shape when viewed from a direction from inner wall surface 32a toward outer wall surface 32b of container side wall 32 of container body 30. Specifically, container side wall 32 provided with housing 31 of container body 30 is provided with through-hole 33 passing through inner wall surface 32a and outer wall surface 32b. Through-hole 33 allows a space inside container body 30 to communicate with a space inside housing 31. Through-hole 33 is provided at a position overlapping through-hole 44 provided in lid side wall 42 of opening-closing lid 40 described later when viewed from the direction from inner wall surface 32a toward outer wall surface 32b of container side wall 32 of container body 30. When a part (protrusion 54) of stopper 50 is inserted into through-holes 33, 44, opening-closing lid 40 engages with stopper 50.

### <First cover member>

As illustrated in Figs. 6 to 8, first cover member 34 is provided on inner wall surface 32a of container side wall 32 of container body 30. First cover member 34 is formed of a member in a plate shape. First cover member 34 is provided on inner wall surface 32a of container side wall 32 of container body 30, and is disposed covering stopper 50 at a part where opening-closing lid 40 engages with stopper 50. The "part where opening-closing lid 40 engages with stopper 50" is a part where through-hole 44 is provided in lid side wall 42 of opening-closing lid 40.

As illustrated in Figs. 7 and 8, first cover member 34 is provided at the following position when viewed from the direction from inner wall surface 32a toward outer wall surface 32b of container side wall 32 of container body 30. That is, first cover member 34 is provided at a position overlapping through-hole 33 provided in container side wall 32 of container body 30 and through-hole 44 provided in lid side wall 42 of opening-closing lid 40. Examples of the state, "provided at an overlapping position", include a state where first cover member 34 is provided at a position overlapping at least a part of each of through-holes 33, 44.

As illustrated in Fig. 7, first cover member 34 extends above through-holes 33, 44 not only from inner wall surface 32a of container side wall 32 of container body 30 toward the side opposite to the side on which stopper 50 is disposed, but also toward opening-closing lid body 41 of opening-closing lid 40. The "side opposite to the side on which stopper 50 is disposed" means a direction from outer wall surface 32b toward inner wall surface 32a of container side wall 32 in the longitudinal direction (Y-direction) of container body 30. "Extending toward opening-closing lid body 41 of opening-closing lid 40" means extending downward in the height direction (Z-direction) of container body 30.

Between first cover member 34 and lid side wall 42 of opening-closing lid 40, gap SP1 for a part (protrusion 54) of stopper 50 to protrude is formed. Gap SP1 has a size in the Y direction that is smaller than height H1, width W1, and depth W2 of protrusion 54. Height H1 of protrusion 54 means a maximum length of protrusion 54 in the Z-direction. Width W1 of protrusion 54 means a maximum length of protrusion 54 in the X-direction. Depth W2 of protrusion 54 means a maximum length of protrusion 54 in the Y-direction. The size of gap SP1 in the Y-direction is 0.5 times or more and less than 1 time height H1 of protrusion 54. The size of gap SP1 in the Y-direction is 0.3 times or more and less than 1 time width W1 of protrusion 54. The size of gap SP1 in the Y-direction is 0.3 times or more and less than 1 time depth W2 of protrusion 54. Thus, even when a crack occurs between protrusion 54 and hook part 52 of stopper 50, this structure enables preventing the cracked part from falling into opening-closing lid 40 through gap SP1. Protrusion 54 is smaller than other parts in stopper 50. Thus, when a crack occurs between protrusion 54 and hook part 52 in the structure of the conventional bread maker, the cracked part is likely to fall into auxiliary-ingredient container 20. In contrast, bread maker 1 of the first exemplary embodiment has gap SP1 with dimension designed as described above. Thus, when a crack occurs between protrusion 54 and hook part 52, the cracked part can be reliably prevented from falling into auxiliary-ingredient container 20.

As illustrated in Fig. 8, gap SP2 is formed between first cover member 34 and opening-closing lid 40 (opening-closing lid body 41). Gap SP2 is smaller in size than through-holes 33, 44 in the Z-direction. The size of gap SP2 in the Z-direction is less than a height of protrusion 54. Thus, even when a crack occurs between protrusion 54 and hook part 52 of stopper 50, this structure enables preventing the cracked part from falling into opening-closing lid 40 through gap SP2. Gap SP2 is not necessarily formed.

### <Opening-closing lid>

As illustrated in Figs. 4 to 8, opening-closing lid 40 opens and closes bottom opening 30b of container body 30. Opening-closing lid 40 includes opening-closing lid body 41, lid side wall 42, and shaft 43.

Opening-closing lid body 41 is a member in a plate shape having main surface PS1. Opening-closing lid body 41 is formed in a rectangular shape having a longitudinal direction (Y-direction) and a lateral direction (X-direction) in plan view. Opening-closing lid body 41 has first end E1 and second end E2 in the longitudinal direction (Y-direction), and has third end E3 and fourth end E4 in the lateral direction (X-direction). Opening-closing lid body 41 is provided at first end E1 and second end E2 in the longitudinal direction (Y-direction) with respective lid side walls 42.

As illustrated in Figs. 7 and 8, lid side wall 42 extends from an outer periphery of opening-closing lid body 41 in a direction intersecting main surface PS1 of opening-closing lid body 41. Lid side wall 42 is formed of a member in a plate shape. Specifically, lid side wall 42 extends in a height direction (Z-direction) of auxiliary-ingredient container 20 from an end of opening-closing lid body 41 in the longitudinal direction (Y-direction). That is, lid side wall 42 extends from the end of opening-closing lid body 41 in the longitudinal direction (Y-direction) toward upper opening 30a of container body 30. Lid side wall 42 is disposed inside container side wall 32 at the end of container body 30 in the longitudinal direction (Y-direction). In the first exemplary embodiment, lid side wall 42 is provided at each of opposite ends of opening-closing lid body 41 in the longitudinal direction (Y-direction), i.e., at each of first end E1 and second end E2.

Lid side wall 42 provided in container body 30 close to first end E1 is provided with through-hole 44 into which a part (protrusion 54) of stopper 50 is inserted. For example, through-hole 44 has a rectangular shape when viewed from the direction from inner wall surface 32a toward outer wall surface 32b of container side wall 32 of container body 30. For example, through-hole 44 is provided in lid side wall 42 at a position close to third end E3 in the lateral direction (X-direction) in container body 30. When opening-closing lid 40 closes bottom opening 30b of container body 30, lid side wall 42 is disposed inside container side wall 32 of container body 30. At this time, through-hole 44 of lid side wall 42 and through-hole 33 of container body 30 face each other. That is, through-hole 44 of lid side wall 42 and through-hole 33 of container body 30 overlap each other when viewed from the direction from inner wall surface 32a toward outer wall surface 32b of container side wall 32. When a part (protrusion 54) of stopper 50 is inserted into through-holes 33, 44 overlapping each other, inner wall 42a defining through-hole 44 engages with stopper 50. As a result, opening-closing lid 40 is held while closing bottom opening 30b of container body 30.

As illustrated in Fig. 5, shaft 43 is provided on lid side wall 42 to serve as a rotation center of opening-closing lid 40. Shaft 43 has, for example, the shape of a cylindrical column. Opening-closing lid 40 and shaft 43 may be integrated by welding, for example. Shaft 43 is provided on lid side wall 42 on a side close to fourth end E4 of opening-closing lid body 41 in the lateral direction (X-direction). Shaft 43 is provided extending in a direction (Y-direction) orthogonal to lid side wall 42. Shaft 43 is rotatably held in container body 30.

As described above, third end E3 of opening-closing lid body 41 in the lateral direction (X-direction) is an open end, whereas opening-closing lid body 41 on a side close to fourth end E4 in the lateral direction (X-direction) is held by shaft 43 in container body 30. Thus, opening-closing lid body 41 is rotatable about the shaft 43.

Opening-closing lid 40 is made of metal, for example. As the metal, for example, aluminum, stainless steel, or the like can be used. Opening-closing lid body 41 made of metal can reflect heat from heating unit 11 and mixing container 10. At least one of the inside and the outside of opening-closing lid 40 may be subjected to alumite processing. This enables opening-closing lid 40 made of aluminum to prevent components of aluminum from being eluted. Alternatively, the inside of opening-closing lid 40 may be coated with fluorine. This enables preventing auxiliary ingredients from adhering to opening-closing lid 40 and from not being separated.

### <Stopper>

As illustrated in Fig. 9, stopper 50 has first end E11 and second end E12, and engages with opening-closing lid 40 on a side close to first end E11. Stopper 50 is configured to open bottom opening 30b of container body 30 by releasing the engagement with opening-closing lid 40. Stopper 50 is rotatably accommodated in housing 31 provided on outer wall surface 32b of container side wall 32 of container body 30. Stopper 50 is rotated in housing 31 to release engagement with opening-closing lid 40. For example, stopper 50 is formed of a resin member. The material of the resin member may be any heat resistant material. Examples of available material of stopper 50 include polyethylene terephthalate (PET), polybutylene terephthalate (PBT), polyphenylene sulfite (PPS), and polyamide (PA).

Stopper 50 includes shaft part 51, hook part 52, and stopper operating part 53.

Shaft part 51 is disposed between first end E11 and second end E12 of stopper 50. Shaft part 51 is rotatably held in housing 31. Shaft part 51 functions as central axis CL1 of rotation of stopper 50. In the first exemplary embodiment, shaft part 51 is rotatably supported by an inner wall of container body 30, the inner wall defining housing 31, and a part (shaft support 62) of second cover member 60. Shaft part 51 is provided on a side in contact with the inner wall defining housing 31 and a side in contact with second cover member 60 with respective curved surfaces 51a each in an arc shape. This allows shaft part 51 to be rotatably supported by the inner wall defining housing 31 and second cover member 60.

Hook part 52 extends from shaft part 51 toward first end E11 and engages with opening-closing lid 40. Hook part 52 is a columnar member extending from shaft part 51 toward first end E11. Hook part 52 constitute a part of stopper 50, the part being close to first end E11. Hook part 52 includes protrusion 54 protruding toward container body 30. When viewed from the direction from inner wall surface 32a toward outer wall surface 32b of container side wall 32 of container body 30, protrusion 54 includes a part smaller in size than opening dimension of each of through-holes 33, 44. Specifically, protrusion 54 has a height decreasing toward the tip of protrusion 54. Here, the height of protrusion 54 means a dimension of protrusion 54 in the Z-direction. Protrusion 54 has upper surface 54a formed in a flat shape.

As illustrated in Fig. 7, protrusion 54 is inserted into through-holes 33, 44. As a result, upper surface 54a of protrusion 54 engages with inner wall 42a defining through-hole 44 of lid side wall 42, and opening-closing lid 40 is held in a closed state.

Returning to Fig. 9, hook part 52 is provided on its side opposite to its side engaging with opening-closing lid 40 with recess 55. In the present specification, hook part 52 has a first side engaging with opening-closing lid 40, the first side being referred to as an inside of hook part 52, and a second side opposite to the first side engaging with opening-closing lid 40, the second side being referred to as an outside of hook part 52.

Recess 55 is provided on the outside of hook part 52. Recess 55 is formed in a wall surface on the outside of hook part 52 by being recessed toward the inside of hook part 52. Recess 55 has contact surface 55a in contact with a part (cover rib 63) of second cover member 60. Contact surface 55a includes an inclined surface inclined toward shaft part 51. In plan view of stopper 50, the inclined surface is inclined from the inside toward the outside of hook part 52. The term, "in plan view of stopper 50, means a state in which stopper 50 is viewed from the height direction (Z-direction).

Stopper operating part 53 extends from shaft part 51 toward second end E12 of stopper 50, and is bent from a direction (X-direction), in which hook part 52 extends, toward a side opposite to a side where opening-closing lid 40 is disposed. Stopper operating part 53 constitute a part of stopper 50, the part being close to second end E12. In the present specification, stopper operating part 53 has a first side on which opening-closing lid 40 is disposed, first side being referred to as an inside of stopper operating part 53, and a second side opposite to the first side on which opening-closing lid 40 is disposed, the second side being referred to as outside of stopper operating part 53.

Stopper operating part 53 is bent in a direction intersecting with a direction (X-direction) in which hook part 52 extends. Specifically, stopper operating part 53 is bent in a direction from the inside to the outside of stopper operating part 53.

Stopper operating part 53 is operated by, for example, plunger 15 of solenoid 16. Specifically, stopper operating part 53 includes operating surface 53a with which plunger 15 comes into contact. Operating surface 53a is a surface on the outside of stopper operating part 53. In the first exemplary embodiment, operating surface 53a is composed of a curved surface in an arc shape. When operating surface 53a is pressed by plunger 15, stopper 50 is rotated about shaft part 51.

Stopper operating part 53 includes stopper rib 56 extending in a height direction (Z-direction) of stopper operating part 53. Stopper rib 56 is provided on an upper surface of stopper operating part 53. Stopper rib 56 is formed in a columnar shape, for example. Stopper rib 56 is in contact with a part (rib contact part 64) of second cover member 60. Stopper rib 56 may protrude in the Z-direction in the shape of a cylindrical column, a rectangular column, or a round protrusion, to be in contact with rib contact part 64.

### <Second cover member>

As illustrated in Fig. 4, second cover member 60 is attached to the outside (outer wall surface 32b side) of container body 30, and holds stopper 50 in housing 31. Specifically, second cover member 60 is disposed closing a part of opening 31a of housing 31 while stopper 50 is accommodated in housing 31. Second cover member 60 is formed in, for example, a plate shape. Second cover member 60 is made of metal, for example.

As illustrated in Fig. 10, second cover member 60 includes cover body 61, shaft support 62, cover rib 63, rib contact part 64, and attachment part 65.

Cover body 61 serves as a base of second cover member 60. Cover body 61 is formed in a plate shape. Cover body 61 includes first main surface PS3, and second main surface PS4 facing first main surface PS3. Cover body 61 is provided with fixing hole 61a for positioning and fixing second cover member 60 to housing 31 provided on outer wall surface 32b of container side wall 32 of container body 30.

Shaft support 62 rotatably supports shaft part 51 of stopper 50. Shaft support 62 is provided at a lower part of cover body 61. Specifically, shaft support 62 protrudes in a direction from second main surface PS4 toward first main surface PS3 at a lower end of cover body 61, and is bent downward of cover body 61. Shaft support 62 has support surface 62a that supports curved surface 51a of shaft part 51 of stopper 50. For example, support surface 62a is formed in a flat shape.

Cover rib 63 comes into contact with contact surface 55a of recess 55 provided on hook part 52 of stopper 50. Cover rib 63 is provided at the lower part of cover body 61. Cover rib 63 protrudes in the direction from second main surface PS4 toward first main surface PS3 at the lower end of cover body 61. The amount of protrusion of cover rib 63 is smaller than the amount of protrusion of shaft support 62. The amount of protrusion of cover rib 63 means a length of cover rib 63 in the Y-direction in second cover member 60, and the amount of protrusion of shaft support 62 means a length of shaft support 62 in the Y-direction in second cover member 60.

Cover rib 63 comes into contact with contact surface 55a of recess 55 provided on hook part 52 of stopper 50. Specifically, when hook part 52 of stopper 50 rotates toward opening 31a of housing 31, cover rib 63 comes into contact with contact surface 55a of recess 55. This restricts movement of hook part 52 outward of opening 31a of housing 31.

Rib contact part 64 comes into contact with stopper rib 56 provided on stopper operating part 53 of stopper 50. Rib contact part 64 is provided laterally from cover body 61. Rib contact part 64 extends in the X-direction from cover body 61.

Rib contact part 64 comes into contact with stopper rib 56 provided on stopper operating part 53. Specifically, when stopper operating part 53 rotates toward opening 31a of housing 31, stopper rib 56 comes into contact with rib contact part 64. This restricts movement of stopper operating part 53 outward of opening 31a of housing 31.

Attachment part 65 is a member for attaching auxiliary-ingredient container 20 to lid 3. Attachment part 65 engages with a recess provided in lid body 5 of lid 3 to be attached to lid body 5.

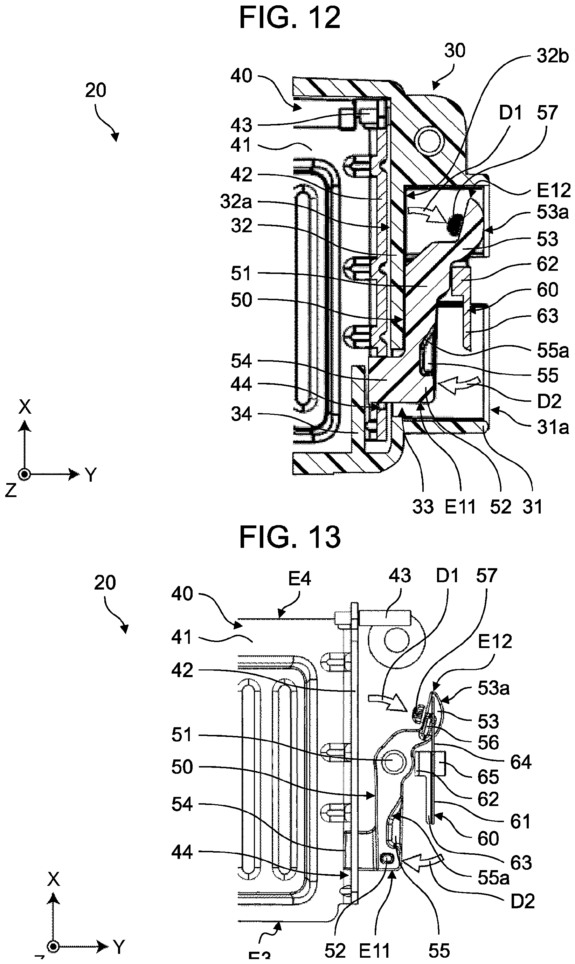

Next, auxiliary-ingredient container 20 in which opening-closing lid 40 is closed will be described with reference to Figs. 11 to 13. Fig. 11 is a side view illustrating an example of a structure of auxiliary-ingredient container 20 in which opening-closing lid 40 is closed. Fig. 12 is a schematic sectional view of auxiliary-ingredient container 20 of Fig. 11 taken along line C-C. Fig. 13 is a schematic view illustrating an example of stopper 50 and opening-closing lid 40 that engage with each other. Fig. 13 does not illustrate container body 30.

As illustrated in Figs. 11 to 13, first cover member 34 and second cover member 60 are disposed covering stopper 50. First cover member 34 is disposed covering first end E11 of stopper 50. Second cover member 60 is disposed covering first end E11 and second end E12 of stopper 50. First cover member 34 is provided inside container body 30, and second cover member 60 is provided outside container body 30. Stopper 50 is disposed between first cover member 34 and second cover member 60.

As illustrated in Fig. 12, first cover member 34 is provided on inner wall surface 32a of container side wall 32 of container body 30, and is disposed covering a part (protrusion 54) of stopper 50 at a place where opening-closing lid 40 and the part (protrusion 54) of stopper 50 engage with each other. Specifically, when viewed from the direction from the inner wall surface 32a toward outer wall surface 32b of container side wall 32, first cover member 34 is disposed at a position overlapping through-hole 44 provided in lid side wall 42 of opening-closing lid 40. When viewed from the direction from inner wall surface 32a toward outer wall surface 32b of container side wall 32, first cover member 34 is also disposed at a position overlapping through-hole 33 provided in container side wall 32 of container body 30.

As illustrated in Figs. 11 to 13, second cover member 60 is disposed outside container body 30 to cover a part of stopper 50. When viewed from the direction from inner wall surface 32a toward outer wall surface 32b of container side wall 32 of container body 30, shaft support 62 of second cover member 60 is disposed at a position overlapping shaft part 51 of stopper 50. When viewed from the direction from outer wall surface 32b toward the inner wall surface 32a of container side wall 32, cover rib 63 of second cover member 60 is disposed at a position overlapping contact surface 55a of recess 55 provided in hook part 52 of stopper 50. When viewed from the direction from outer wall surface 32b toward inner wall surface 32a of container side wall 32, rib contact part 64 of second cover member 60 is disposed at a position overlapping stopper rib 56 provided on stopper operating part 53 of stopper 50.

In the first exemplary embodiment, protrusion 57 in a semi-sphere shape is provided on an opposite surface of stopper operating part 53 to operating surface 53a thereof. Although not illustrated, an elastic body is disposed between protrusion 57 and container side wall 32. The elastic body is, for example, a leaf spring. The elastic body presses protrusion 57 toward opening 31a of housing 31.

As illustrated in Figs. 12 and 13, stopper operating part 53 is pressed in first engagement direction D1 by the elastic body. First engagement direction D1 is a direction in which stopper operating part 53 is pressed out toward opening 31a of housing 31, and is a direction in which stopper operating part 53 is separated from container side wall 32 of container body 30. When stopper operating part 53 rotates in first engagement direction D1, stopper rib 56 of stopper operating part 53 comes into contact with rib contact part 64 of second cover member 60. Stopper rib 56 restricts pressing out of stopper operating part 53 outward from opening 31a of housing 31.

When stopper operating part 53 rotates about shaft part 51 in first engagement direction D1, hook part 52 located opposite to stopper operating part 53 rotates about shaft part 51 in second engagement direction D2. Second engagement direction D2 is a direction in which hook part 52 approaches container side wall 32 of container body 30. This allows protrusion 54 of hook part 52 to be inserted into through-holes 33, 44, and then protrusion 54 engages with lid side wall 42 of opening-closing lid 40. As a result, opening-closing lid 40 is held by stopper 50 while closing bottom opening 30b of container body 30.

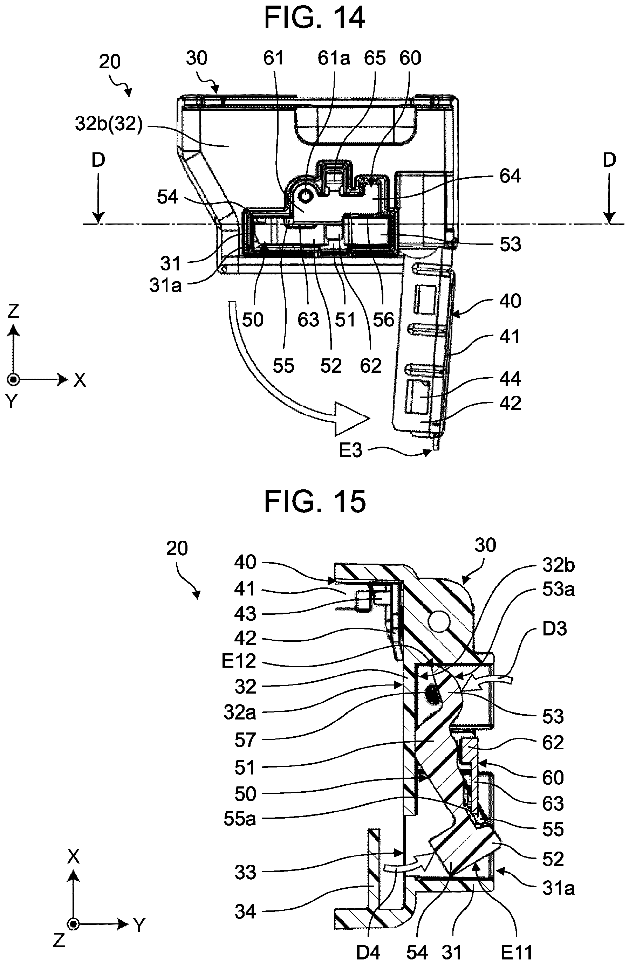

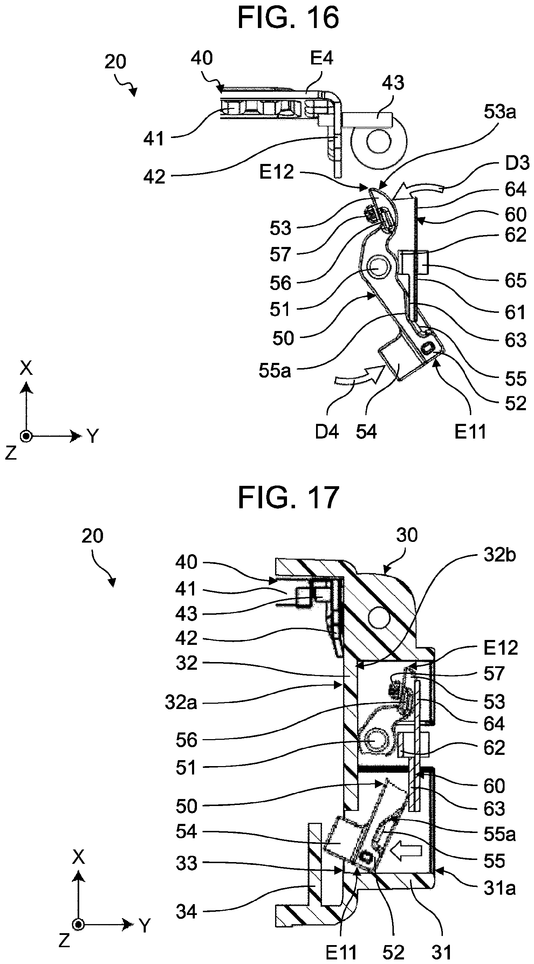

Next, auxiliary-ingredient container 20 in which opening-closing lid 40 is opened will be described with reference to Figs. 14 to 16. Fig. 14 is a schematic view illustrating an example of a structure of auxiliary-ingredient container 20 in which opening-closing lid 40 is opened. Fig. 15 is a schematic sectional view of auxiliary-ingredient container 20 of Fig. 14 taken along line D-D. Fig. 16 is a schematic view illustrating an example of stopper 50 and opening-closing lid 40 that disengage from each other. Fig. 16 does not illustrate container body 30.

As illustrated in Figs. 14 to 16, opening-closing lid 40 rotates with opening-closing lid body 41 with third end E3 that rotates downward about shafts 43 provided close to fourth end E4 of opening-closing lid body 41. This allows opening-closing lid 40 to open bottom opening 30b of container body 30.

As illustrated in Figs. 15 and 16, stopper operating part 53 is pressed in first release direction D3 by plunger 15 of solenoid 16, for example. First release direction D3 is opposite to first engagement direction D1, and is a direction in which stopper operating part 53 approaches container side wall 32 of container body 30. Plunger 15 of solenoid 16 applies a force against a pressing force of the elastic body to operating surface 53a of stopper operating part 53. This causes stopper operating part 53 to rotate in first release direction D3 about shaft part 51.

When stopper operating part 53 rotates about shaft part 51 in first release direction D3, hook part 52 located opposite to stopper operating part 53 rotates about shaft part 51 in second release direction D4. Second release direction D4 is a direction in which hook part 52 is separated from container side wall 32 of container body 30. This allows protrusion 54 of hook part 52 to come out of through-holes 33, 44, and then engagement between protrusion 54 and lid side wall 42 of opening-closing lid 40 is released. As a result, opening-closing lid 40 can open bottom opening 30b of container body 30.

When hook part 52 rotates about shaft part 51 in second release direction D4, cover rib 63 of second cover member 60 comes into contact with contact surface 55a of recess 55 provided in hook part 52. Cover rib 63 restricts pressing out of hook part 52 outward from opening 31a of housing 31.

### [Example of stopper that is damaged]

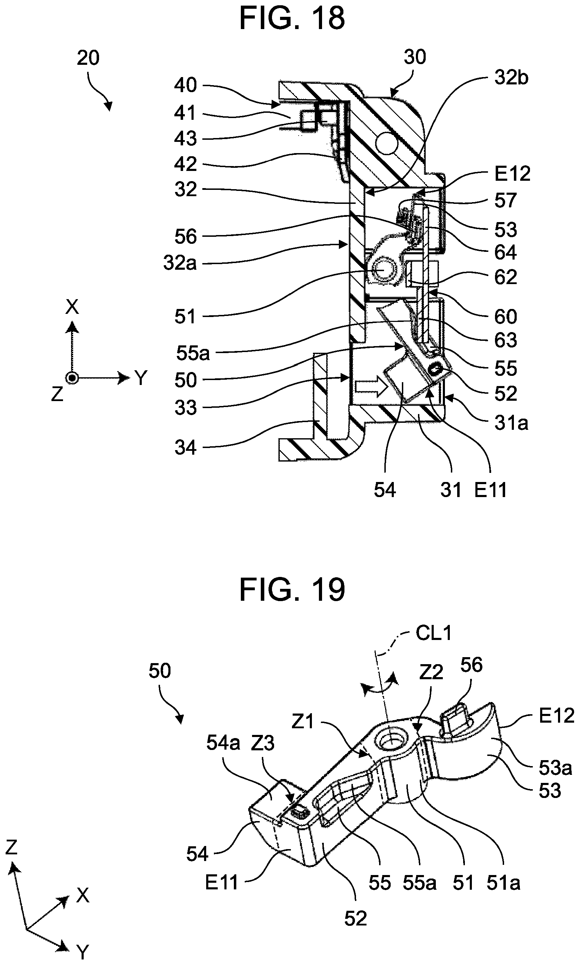

With reference to Figs. 17 and 18, an example of stopper 50 that is damaged will be described. Figs. 17 and 18 are each a schematic view illustrating an example of stopper 50 that is damaged. The examples illustrated in Figs. 17 and 18 each illustrate stopper 50 in which a crack occurs near shaft part 51.

As illustrated in Fig. 17, when stopper 50 is damaged and the crack occurs between shaft part 51 and hook part 52, hook part 52 is separated from shaft part 51. Separated hook part 52 becomes free in housing 31 without being held. Thus, when an impact is applied to auxiliary-ingredient container 20, for example, hook part 52 separated by the impact moves in housing 31.

When separated hook part 52 moves toward through-hole 33 of container body 30, separated hook part 52 comes into contact with first cover member 34 provided inside container body 30. First cover member 34 prevents separated hook part 52 from passing through through-hole 33 and moving into container body 30.

As illustrated in Fig. 18, when separated hook part 52 moves toward the outside of housing 31, separated hook part 52 comes into contact with second cover member 60 provided outside container body 30. Specifically, contact surface 55a of recess 55 provided in hook part 52 comes into contact with cover rib 63 of second cover member 60. Cover rib 63 of second cover member 60 prevents separated hook part 52 from moving outward of housing 31.

Stopper 50 remaining after hook part 52 is separated includes shaft part 51 and stopper operating part 53. Stopper operating part 53 receives a force toward opening 31a of housing 31 due to a pressing force of the elastic body. This loads stopper operating part 53 with a force pressing it outward of housing 31. At this time, stopper rib 56 provided on stopper operating part 53 comes into contact with rib contact part 64 of second cover member 60. Rib contact part 64 prevents stopper operating part 53 from moving outward of housing 31.

As described above, first cover member 34 prevents a part separated after stopper 50 is damaged from moving into container body 30, and second cover member 60 prevents the part from falling to the outside of container body 30. That is, cover members 34, 60 can prevent the separated part from falling to the inside and the outside of container body 30.

### [Effects]

Bread maker 1 according to the first exemplary embodiment achieves the following effects.

Bread maker 1 according to the first exemplary embodiment of the present disclosure includes device body 2, lid 3, mixing container 10, and auxiliary-ingredient container 20. Device body 2 is provided inside with heating chamber 9 and includes device opening 2a. Lid 3 is attached to device body 2 to open and close device opening 2a. Mixing container 10 is accommodated in heating chamber 9, and kneads and heats cooking ingredients. Auxiliary-ingredient container 20 contains auxiliary ingredients, and feeds the auxiliary ingredients into mixing container 10. Auxiliary-ingredient container 20 includes container body 30, opening-closing lid 40, stopper 50, and cover members 34, 60. Container body 30 includes bottom opening 30b. Opening-closing lid 40 opens and closes bottom opening 30b of container body 30. Stopper 50 engages with opening-closing lid 40, and is configured to open bottom opening 30b of container body 30 by releasing the engagement with opening-closing lid 40. Cover members 34, 60 are disposed covering first end E11 and second end E12 of stopper 50.

This structure enables bread maker 1 to ensure safety when a component is damaged. Specifically, cover members 34, 60 are disposed covering first end E11 and second end E12 of stopper 50. Even when stopper 50 is damaged and separated, auxiliary-ingredient container 20 can prevent a separated part from falling to the inside and the outside of auxiliary-ingredient container 20 due to cover members 34, 60. This enables auxiliary-ingredient container 20 to prevent the separated part from accidentally entering mixing container 10 so that safety of bread maker 1 can be ensured.

Cover members 34, 60 include first cover member 34 that is provided on inner wall surface 32a of container side wall 32 of container body 30, and that is disposed covering a part of stopper 50 at a place where opening-closing lid 40 and the part of stopper 50 engage with each other. This structure allows auxiliary-ingredient container 20 to easily prevent a part of stopper 50 separated due to damage from entering container body 30, and thus the safety of bread maker 1 can be ensured more easily.

Opening-closing lid 40 includes opening-closing lid body 41 and lid side wall 42. Opening-closing lid body 41 is formed in a plate shape having main surface PS1. Lid side wall 42 extends from the outer periphery of opening-closing lid body 41 in the direction intersecting main surface PS1 of opening-closing lid body 41. Lid side wall 42 is provided with through-hole 44 into which a part of stopper 50 is inserted. First cover member 34 is disposed at a position overlapping through-hole 44 when viewed from the direction from inner wall surface 32a toward outer wall surface 32b of container side wall 32. This structure allows auxiliary-ingredient container 20 to easily prevent a part of stopper 50 separated due to damage from entering container body 30, and thus the safety of bread maker 1 can be ensured more easily.

First cover member 34 extends above through-hole 44 not only from inner wall surface 32a of container side wall 32 toward the side opposite to the side on which stopper 50 is disposed, but also toward opening-closing lid body 41. This structure enables auxiliary-ingredient container 20 to prevent a part of stopper 50 separated due to damage from moving above through-hole 44, and thus the safety of bread maker 1 can be ensured more easily. Covering above through-hole 44 with first cover member 34 in auxiliary-ingredient container 20 enables preventing through-hole 44 from being clogged with auxiliary ingredients contained in container body 30.

Between first cover member 34 and opening-closing lid body 41, gap SP1 is formed. This structure enables auxiliary-ingredient container 20 to prevent contact between first cover member 34 and opening-closing lid body 41, and thus enabling preventing first cover member 34 from being damaged by opening-closing operation of opening-closing lid 40.

Outer wall surface 32b of container side wall 32 of container body 30 is provided with housing 31 that accommodates stopper 50 in a rotatable manner. Stopper 50 includes shaft part 51, hook part 52, and stopper operating part 53. Shaft part 51 is disposed between first end E11 and second end E12, and is rotatably held in housing 31. Hook part 52 extends from shaft part 51 toward first end E11 and engages with opening-closing lid 40. Stopper operating part 53 extends from shaft part 51 toward second end E12, and is bent from a direction, in which hook part 52 extends, toward a side opposite to a side where opening-closing lid 40 is disposed. When stopper operating part 53 rotates about shaft part 51 in first release direction D3 toward container side wall 32, hook part 52 rotates in second release direction D4 away from container side wall 32 to release engagement between opening-closing lid 40 and hook part 52. This structure allows bread maker 1 to be configured such that opening-closing lid 40 of auxiliary-ingredient container 20 can be easily opened.

Cover members 34, 60 include second cover member 60 that is disposed close to outer wall surface 32b of container side wall 32 to hold stopper 50 in housing 31. This structure allows auxiliary-ingredient container 20 to easily prevent a part of stopper 50 separated due to damage from falling to the outside of container body 30, and thus the safety of bread maker 1 can be ensured more easily.

Hook part 52 is provided with recess 55 with contact surface 55a on a side opposite to a side where hook part 52 engages with opening-closing lid 40. Second cover member 60 include cover rib 63 disposed at a position overlapping contact surface 55a of recess 55 when viewed from a direction from outer wall surface 32b toward inner wall surface 32a of container side wall 32. This structure enables auxiliary-ingredient container 20 to easily prevent hook part 52 separated due to damage of stopper 50 from falling to the outside of housing 31 by allowing contact surface 55a of recess 55 to come into contact with cover rib 63.

Stopper operating part 53 includes stopper rib 56 extending in a height direction (Z-direction) of stopper operating part 53. Second cover member 60 include rib contact part 64 disposed at a position overlapping stopper rib 56 when viewed from the direction from outer wall surface 32b toward inner wall surface 32a of container side wall 32. This structure enables auxiliary-ingredient container 20 to easily prevent stopper operating part 53 separated due to damage of stopper 50 from falling to the outside of housing 31 by allowing stopper rib 56 to come into contact with rib contact part 64.

Opening-closing lid 40 is made of metal. This structure enables opening-closing lid 40 to reflect heat into heating chamber 9.

Bread maker 1 further include solenoid 16 with plunger 15 that moves toward stopper 50. This structure facilitates operation of stopper 50.

Auxiliary-ingredient containers 20 is disposed above mixing container 10. This structure enables auxiliary-ingredient container 20 to easily feed auxiliary ingredients into mixing container 10.

Although in the first exemplary embodiment, an example is described in which opening-closing mechanism 14 is solenoid 16 with plunger 15, the structure of opening-closing mechanism 14 is not limited thereto. Opening-closing mechanism 14 may have a structure capable of moving stopper operating part 53 of stopper 50.

Although in the first exemplary embodiment, an example is described in which through-hole 33 provided in container side wall 32 has a rectangular shape when viewed from the direction from inner wall surface 32a toward outer wall surface 32b of container side wall 32 of container body 30, the shape of through-hole 33 is not limited thereto. Through-hole 33 may have a circular shape, an elliptical shape, or a polygonal shape. Alternatively, through-hole 33 may be a cutout. For example, the cutout is formed by opening a part of an inner wall defining through-hole 33.

Although in the first exemplary embodiment, an example is described in which through-hole 44 provided in lid side wall 42 of opening-closing lid 40 has a rectangular shape when viewed from the direction from inner wall surface 32a toward outer wall surface 32b of container side wall 32 of container body 30, the shape of through-hole 44 is not limited thereto. Through-hole 44 may have a circular shape, an elliptical shape, or a polygonal shape. Alternatively, through-hole 44 may be a cutout. For example, the cutout is formed by opening a part of an inner wall defining through-hole 44.

Although in the first exemplary embodiment, an example is described in which auxiliary-ingredient container 20 includes cover members 34, 60, the structure of auxiliary-ingredient container 20 is not limited thereto. Auxiliary-ingredient container 20 may include one or more cover members. For example, auxiliary-ingredient container 20 may include one of cover members 34, 60 or both of cover members 34, 60 that are disposed covering at least one of first end E11 and second end E12 of stopper 50.

Although in the first exemplary embodiment, an example is described in which stopper 50 includes stopper rib 56, the structure of stopper 50 is not limited thereto. Stopper 50 may not include stopper rib 56.

Although in the first exemplary embodiment, an example is described in which hook part 52 of stopper 50 is provided with recess 55 and contact surface 55a, the structure of stopper 50 is not limited thereto. Hook part 52 of stopper 50 may not be provided with at least one of recess 55 and contact surface 55a.

Although in the first exemplary embodiment, an example is described in which second cover member 60 includes cover rib 63, rib contact part 64, and attachment part 65, the structure of second cover member 60 is not limited thereto. Second cover member 60 may not include at least one of cover rib 63, rib contact part 64, and attachment part 65.

Although in the first exemplary embodiment, an example is described in which shaft part 51 of stopper 50 is rotatably supported by shaft support 62 of second cover member 60, shaft part 51 may not be supported by shaft support 62. For example, shaft part 51 may be rotatably supported by a support provided in housing 31 of container body 30. Alternatively, shaft part 51 may be rotatably supported by a member different from second cover member 60.

Although in the first exemplary embodiment, an example is described in which auxiliary-ingredient container 20 is attached to lid 3, auxiliary-ingredient container 20 may be attached to device body 2. For example, bread maker 1 may include two types of lid such as lid 3 for device body 2 and a lid for auxiliary-ingredient container 20, the lid being composed of a member different from lid 3 for device body, or auxiliary-ingredient container 20 may be attached to device body 2 instead of lid 3.

Although in the first exemplary embodiment, an example is described with reference to Figs. 17 and 18 in which stopper 50 cracks between shaft part 51 and hook part 52, it is also conceivable that stopper 50 cracks at another part. For example, it is conceivable that stopper 50 cracks between shaft part 51 and stopper operating part 53. Fig. 19 is a schematic view illustrating an example of cracking of stopper 50. As illustrated in Fig. 19, stopper 50 may crack at a part such as part Z1 between shaft part 51 and hook part 52, part Z2 between shaft part 51 and stopper operating part 53, or part Z3 between hook part 52 and protrusion 54. Even when stopper 50 cracks at any of part Z1, part Z2, and part Z3, bread maker 1 can prevent a cracked part of stopper 50 from falling to the inside and the outside of auxiliary-ingredient container 20.

Bread maker 1 may be configured such that opening 31a of housing 31 of auxiliary-ingredient container 20 is covered with a member made of PBT or the like. Second cover member 60 may be disposed over opening 31a of housing 31 in the Z-direction. First cover member 34 may be configured to cover all of through-holes 33, 44.

### <First modification>

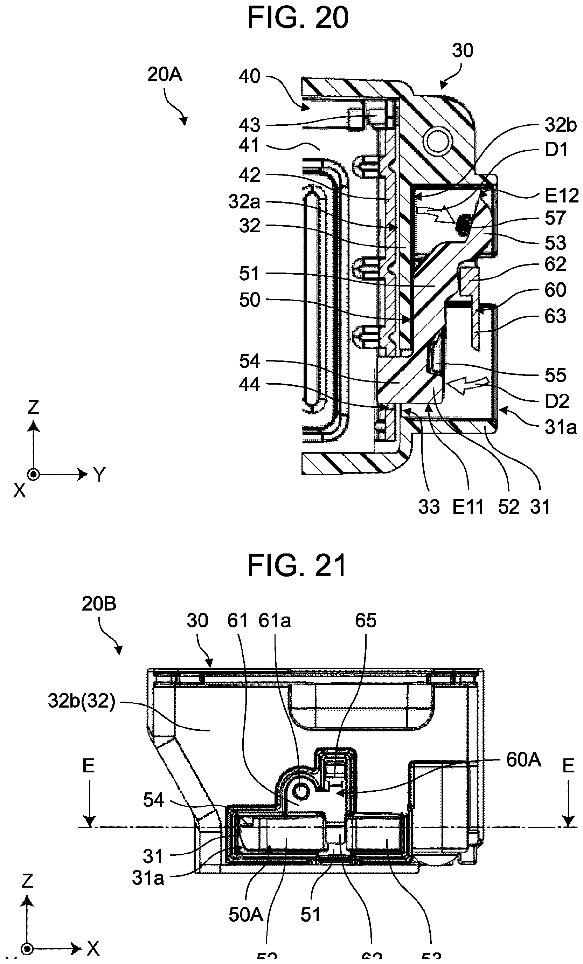

Fig. 20 is a schematic view illustrating a structure of an auxiliary-ingredient container 20A of a first modification. As illustrated in Fig. 20, auxiliary-ingredient container 20A is different from auxiliary-ingredient container 20 of the first exemplary embodiment in not including first cover member 34. Auxiliary-ingredient container 20A is similar in other structures to auxiliary-ingredient container 20 of the first exemplary embodiment. As described above, auxiliary-ingredient container 20A may include second cover member 60 and may not include first cover member 34. Auxiliary-ingredient container 20A may be configured such that second cover member 60 can prevent stopper 50 from falling to the outside of housing 31.

### <Second modification>

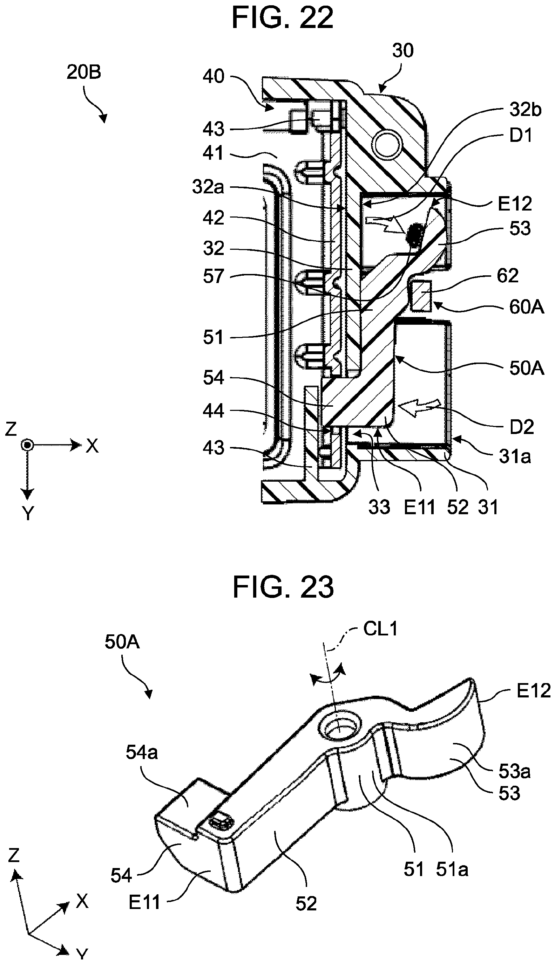

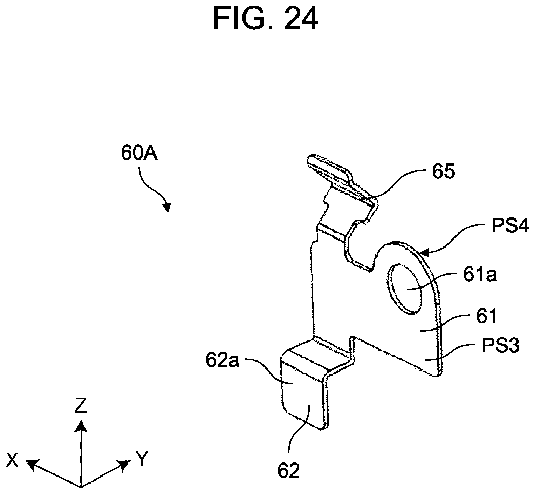

Fig. 21 is a schematic side view illustrating a structure of auxiliary-ingredient container 20B of a second modification. Fig. 22 is a schematic sectional view of auxiliary-ingredient container 20B of Fig. 21 taken along line E-E. Fig. 23 is a schematic perspective view illustrating a structure of stopper 50A of the second modification. Fig. 24 is a schematic perspective view illustrating a structure of second cover member 60A of the second modification. As illustrated in Figs. 21 and 22, auxiliary-ingredient container 20B is different from auxiliary-ingredient container 20 in that stopper 50A and second cover member 60A are provided instead of stopper 50 and second cover member 60 of auxiliary-ingredient container 20 of the first exemplary embodiment.

As illustrated in Fig. 23, stopper 50A does not include stopper rib 56. Hook part 52 of stopper 50A is not provided with recess 55 and contact surface 55a. As illustrated in Fig. 24, second cover member 60A does not include cover rib 63 and rib contact part 64. As described above, although auxiliary-ingredient container 20B is configured such that shaft support 62 of second cover member 60A is in contact with and supports shaft part 51 of stopper 50A in a rotatable manner, second cover member 60A may not come into contact with hook part 52 and stopper operating part 53. Auxiliary-ingredient container 20B may be configured such first cover member 34 can prevent stopper 50 from moving to the inside of container body 30.

The bread maker of the present disclosure is applicable to a household or commercial bread maker for making various types of breads.

### REFERENCE MARKS IN THE DRAWINGS

| | |
|---|---|
| 1 | bread maker |
| 2 | device body |
| 2a | device opening |
| 3 | lid |

| | |
|---|---|
| 4 | operation unit |
| 5 | lid body |
| 6 | outer lid |
| 7 | selector |
| 8 | display unit |
| 9 | heating chamber |
| 10 | mixing container |
| 11 | heating unit |
| 12 | attachment hole |
| 13 | upper lid |
| 14 | opening-closing mechanism |
| 15 | plunger |
| 16 | solenoid |
| 20 | auxiliary-ingredient container |
| 20A | auxiliary-ingredient container |
| 20B | auxiliary-ingredient container |
| 21 | auxiliary-ingredient container |
| 30 | container body |
| 30a | upper opening |
| 30b | bottom opening |
| 31 | housing |
| 31a | opening |
| 32 | container side wall |
| 32a | inner wall surface |
| 32b | outer wall surface |
| 33 | through-hole |
| 34 | first cover member |
| 40 | opening-closing lid |
| 41 | opening-closing lid body |
| 42 | lid side wall |
| 42a | inner wall |

| | |
|---|---|
| 43 | shaft |
| 44 | through-hole |
| 50 | stopper |
| 50A | stopper |
| 51 | shaft part |
| 51a | curved surface |
| 52 | hook part |
| 53 | stopper operating part |
| 53a | operating surface |
| 54 | protrusion |
| 54a | upper surface |
| 55 | recess |
| 55a | contact surface |
| 56 | stopper rib |
| 57 | protrusion |
| 60 | second cover member |
| 60A | second cover member |
| 61 | cover body |
| 61a | fixing hole |
| 62 | shaft support |
| 62a | support surface |
| 63 | cover rib |
| 64 | rib contact part |
| 65 | attachment part |
| CL1 | central axis |
| D1 | first engagement direction |
| D2 | second engagement direction |
| D3 | first release direction |
| D4 | second release direction |
| E1 | first end |
| E2 | second end |
| E3 | first end |
| E4 | second end |
| E11 | first end |

| | |
|---|---|
| E12 | second end |
| H1 | height |
| PS1 | main surface |
| PS3 | first main surface |
| PS4 | second main surface |
| SP1 | gap |
| SP2 | gap |
| W1 | width |
| W2 | depth |
| Z1 | part |
| Z2 | part |
| Z3 | part |

## Claims

1. A bread maker (1) comprising:
a device body (2) provided inside with a heating chamber (9) and includes a device opening (2a);
a lid (3) attached to the device body (2) to open and close the device opening (2a);
a mixing container (10) that is accommodated in the heating chamber (9), and kneads and heats cooking ingredients; and
an auxiliary-ingredient container (20) that contains auxiliary ingredients, and feeds the auxiliary ingredients into the mixing container (10),
the auxiliary-ingredient container (20) including:
a container body (30) with a bottom opening (30b);
an opening-closing lid (40) that opens and closes the bottom opening (30b) of the container body (30);
a stopper (50) that engages with the opening-closing lid (40), and is configured to open the bottom opening (30b) of the container body (30) by releasing the engagement with the opening-closing lid (40); and
one or more cover members (34, 60) that are disposed covering at least one of first and second ends (E11, E12) of the stopper (50),
**characterized in that**
the one or more cover members (34, 60) include a first cover member (34) that is provided on an inner wall surface (32a) of a container side wall (32) of the container body (30) and disposed covering a part of the stopper (50) at a place where the opening-closing lid (40) engages with the part of the stopper (50).

2. The bread maker (1) according to Claim 1, **characterized in that**
the opening-closing lid (40) includes
an opening-closing lid body (41) in a plate shape with a main surface (PS1), and
a lid side wall (42) that extends from an outer periphery of the opening-closing lid body (41) in a direction intersecting the main surface (PS1) of the opening-closing lid body (41), the lid side wall (42) is provided with a through-hole (44) into which the part of the stopper (50) is inserted, and
the first cover member (34) is disposed at a position overlapping the through-hole (44) when viewed from a direction from an inner wall surface (32a) toward an outer wall surface (32b) of the container side wall (32).

3. The bread maker (1) according to Claim 2, **characterized in that**
the first cover member (34) extends above the through-hole (44) not only from the inner wall surface (32a) of the container side wall (32) toward a side opposite to a side on which the stopper (50) is disposed, but also toward the opening-closing lid body (41).

4. The bread maker (1) according to Claim 2 or 3, **characterized in that**
a gap (SP1) is formed between the first cover member (34) and the opening-closing lid body (41).

5. The bread maker (1) according to Claim 1, **characterized in that**
a housing (31) for accommodating the stopper (50) in a rotatable manner is provided on an outer wall surface (32b) of the container side wall (32) of the container body (30),
the stopper (50) includes
a shaft part (51) that is disposed between the first and second ends (E11, E12), and is rotatably held in the housing (31),
a hook part (52) that extends from the shaft part (51) toward the first end and engages with the opening-closing lid (40), and
a stopper operating part (53) that extends from the shaft part (51) toward the second end (E12), and is bent from a direction, in which the hook part (52) extends, toward a side opposite to a side where the opening-closing lid (40) is disposed, and
when the stopper operating part (53) rotates about the shaft part (51) in a first release direction toward the container side wall (32), the hook part (52) rotates in a second release direction away from the container side wall (32) to release engagement between the opening-closing lid (40) and the hook part (52).

6. The bread maker (1) according to Claim 5, **characterized in that**
the one or more cover members (34, 60) include a second cover member (60) that is disposed close to the outer wall surface (32b) of the container side wall (32) to hold the stopper in the housing (31).

7. The bread maker (1) according to Claim 6, **characterized in that**
the hook part (52) is provided with a recess (55) with a contact surface (55a) on a side opposite to a side where the hook part (52) engages with the opening-closing lid (40), and
the second cover member (60) includes a cover rib (63) disposed at a position overlapping the contact surface (55a) of the recess (55) when viewed from a direction from the outer wall surface (32b) toward the inner wall surface (32a) of the container side wall (32).

8. The bread maker (1) according to Claim 6 or 7, **characterized in that**
the stopper operating part (53) includes a stopper rib (56) extending in a height direction of the stopper operating part (64), and
the second cover member (60) includes a rib contact part (64) disposed at a position overlapping the stopper rib (56) when viewed from the direction from the outer wall surface (32b) toward the inner wall surface (32a) of the container side wall (32).

9. The bread maker (1) according to any one of Claims 1 to 8, **characterized in that** the opening-closing lid (40) is made of metal.

10. The bread maker (1) according to any one of Claims 1 to 9, further **characterized by**: a solenoid (16) with a plunger (15) that moves toward the stopper (50).

11. The bread maker (1) according to any one of Claims 1 to 10, **characterized in that** the auxiliary-ingredient container (20) is disposed above the mixing container (10).

## Patentansprüche

1. Eine Brotbackmaschine (1) aufweisend:
ein Gerätekörper (2), der im Inneren mit einer Heizkammer (9) bereitgestellt ist und der eine Geräteöffnung (2a) aufweist, ein Deckel (3), der an dem Gerätekörper (2) zum Öffnen und Schließen der Geräteöffnung (2a) angebracht ist, ein Vermischungsbehälter (10), der in der Heizkammer (9) untergebracht ist und der Kochzutaten knetet und beheizt, und ein Hilfszutatenbehälter (20), der Hilfszutaten beinhaltet und die Hilfszutaten in den Vermischungsbehälter (10) zuführt, der Hilfszutatenbehälter (20) weist auf:
ein Behälterkörper (30) mit einer Bodenöffnung (30b), ein Öffnungs-Schließendeckel (40), der die Bodenöffnung (30b) des Behälterkörpers (30) öffnet und schließt, ein Stopper (50), der mit den Öffnungs-Schließendeckel (40) interagiert und konfiguriert ist, um die Bodenöffnung (30b) des Behälterkörpers (30) durch Freigeben der Interaktion mit dem Öffnungs-Schließendeckel (40) zu öffnen; und ein oder mehrere Abdeckglieder (34, 60), die vorgesehen sind zum Abdecken von zumindest einem des ersten und des zweiten Endes (E11, E12) des Stoppers (50), **dadurch gekennzeichnet, dass**
das eine oder mehrere Abdeckglied (34, 60) ein erstes Abdeckglied (34) beinhalten, das an einer Innenwandoberfläche (32a) von einer Behälterseitenwand (32) des Behälterkörpers (30) bereitgestellt ist und zum Abdecken eines Teils des Stoppers (50) an einem Platz vorgesehen ist bei dem der Öffnungs-Schließendeckel (40) mit dem Teil des Stoppers (50) interagiert.

2. Die Brotbackmaschine (1) gemäß Anspruch 1, **dadurch gekennzeichnet, dass** der Öffnungs-Schließendeckel (40) einen Öffnungs-Schließendeckelkörper (41) in einer Plattengestalt mit einer Hauptoberfläche (PS1) beinhaltet, und eine Deckelseitenwand (42), die sich von einer Außenperipherie des Öffnungs-Schließendeckelkörpers (41) in einer Richtung erstreckt, die sich mit der Hauptoberfläche (PS1) des Öffnungs-Schließendeckelkörpers (41) schneidet, die Deckelseitenwand (42) ein Durchgangsloch (44) hat in das der Teil des Stoppers (50) eingesetzt ist, und das erste Abdeckglied (34) ist an einer Position vorgesehen, die sich mit dem Durchgangsloch (44) überlappt, gesehen von einer Richtung von einer Innenwandoberfläche (32a) zu einer Außenwandoberfläche (32b) der Behälterseitenwand (32).

3. Die Brotbackmaschine (1) gemäß Anspruch 2, **dadurch gekennzeichnet, dass** das erste Abdeckglied (34) über das Durchgangsloch (44) nicht nur von der Innenwandoberfläche (32a) der Behälterseitenwand (32) zu einer Seite gegenüber einer Seite erstreckt bei der der Stopper (5) vorhanden ist, sondern auch zum Öffnungs-Schließendeckelkörper (41).

4. Die Brotbackmaschine (1) gemäß Anspruch 2 oder 3, **dadurch gekennzeichnet, dass** eine Lücke (SP1) zwischen dem ersten Abdeckglied (34) und dem Öffnungs-Schließendeckelkörper (41) geformt ist.

5. Die Brotbackmaschine (1) gemäß Anspruch 1, **dadurch gekennzeichnet, dass** ein Gehäuse (31) zum Unterbringen des Stoppers (50) in einer drehbaren Art an einer Außenwandoberfläche (32b) der Behälterseitenwand (32) des Behälterkörpers (30) vorgesehen ist, der Stopper (50) einen Wellenteil (51) beinhaltet, der zwischen den ersten und zweiten Enden (E11, E12) vorgesehen ist und der drehbar in dem Gehäuse (31) gehalten ist, ein Hakenteil (52), das sich von dem Wellenteil (51) zu dem ersten Ende erstreckt, und das mit dem Öffnungs-Schließendeckel (40) interagiert, und ein Stopperbetätigungsteil (53), das sich von dem Wellenteil (51) zu dem zweiten Ende (E12) erstreckt und das in einer Richtung gebogen ist in der das Hakenteil (52) sich erstreckt, zu einer Seite gegenüber einer Seite, an der der Öffnungs-Schließendeckel (40) vorgesehen ist, und wenn das Stopperbetätigungsteil (53) sich um das Wellenteil (51) in einer ersten Freigaberichtung zur Behälterseitenwand (32) dreht, das Hakenteil (52) in einer zweiten Freigaberichtung rotiert, weg von der Behälterseitenwand (32) um die Interaktion zwischen dem Öffnungs-Schließendeckel (40) und dem Hakenteil (52) freizugeben.

6. Die Brotbackmaschine (1) gemäß Anspruch 5, **dadurch gekennzeichnet, dass** das eine oder mehrere Abdeckglied (34, 60) ein zweites Abdeckglied (60) beinhaltet, das vorgesehen ist um die Außenwandoberfläche (32b) der Behälterseitenwand (32) zu schließen zum Halten des Stoppers in dem Gehäuse (31).

7. Die Brotbackmaschine (1) gemäß Anspruch 6, **dadurch gekennzeichnet, dass** das Hakenteil (52) mit einer Vertiefung (55) versehen ist mit einer Kontaktoberfläche (55a) an einer Seite gegenüber einer Seite an der das Hakenteil (52) mit dem Öffnungs-Schließendeckel (40) interagiert, und das zweite Abdeckglied (60) eine Abdeckrippe (63) hat an einer Position überlappend mit der Kontaktoberfläche (55a) der Vertiefung (55) gesehen von einer Richtung von der Außenwandoberfläche (32b) zur Innenwandoberfläche (32a) der Behälterseitenwand (32).

8. Die Brotbackmaschine (1) gemäß Anspruch 6 oder 7, **dadurch gekennzeichnet, dass** das Stopperbetätigungsteil (53) eine Stopperrippe (56) hat, die sich in einer Höhenrichtung des Stopperbetätigungsteils (64) erstreckt, und das zweite Abdeckglied (60) einen Rippenkontaktteil (64) hat, der an einer Position überlappend mit der Stopperrippe (56) ist, gesehen von der Richtung von der Außenwandoberfläche (32b) zu der Innenwandoberfläche (32a) der Behälterseitenwand (32).

9. Die Brotbackmaschine (1) gemäß einem der Ansprüche 1 bis 8, **dadurch gekennzeichnet, dass** der Öffnungs-Schließendeckel (40) aus Metall hergestellt ist.

10. Die Brotbackmaschine (1) gemäß einem der Ansprüche 1 bis 9, **gekennzeichnet durch,** eine Spule (16) mit einem Kolben (15), der sich zu dem Stopper (50) bewegt.

11. Die Brotbackmaschine (1) gemäß einem der Ansprüche 1 bis 10, **dadurch gekennzeichnet, dass** der Hilfszutatenbehälter (20) oberhalb des Vermischungsbehälters (10) vorgesehen ist.

## Revendications

1. Machine à pain (1) comprenant :
un corps de dispositif (2) pourvu à l'intérieur d'une chambre de chauffage (9) et comprend une ouverture de dispositif (2a) ;
un couvercle (3) fixé au corps de dispositif (2) pour ouvrir et fermer l'ouverture de dispositif (2a) ;
un récipient de mélange (10) qui est logé dans la chambre de chauffage (9) et pétrit et chauffe les ingrédients de cuisson ; et
un récipient d'ingrédients auxiliaires (20) qui contient des ingrédients auxiliaires, et introduit les ingrédients auxiliaires dans le récipient de mélange (10),
le récipient d'ingrédients auxiliaires (20) comprenant :
un corps de récipient (30) avec une ouverture inférieure (30b) ;
un couvercle d'ouverture-fermeture (40) qui ouvre et ferme l'ouverture inférieure (30b) du corps de récipient (30) ;
un bouchon (50) qui s'engage avec le couvercle d'ouverture-fermeture (40), et est configuré pour ouvrir l'ouverture inférieure (30b) du corps de récipient (30) en libérant l'engagement avec le couvercle d'ouverture-fermeture (40) ; et
un ou plusieurs éléments de couverture (34, 60) qui sont disposés de manière à couvrir au moins l'une des première et deuxième extrémités (E11, E12) du bouchon (50),
**caractérisée en ce que**
le ou les plusieurs éléments de couverture (34, 60) comprennent un premier élément de couverture (34) qui est prévu sur une surface de paroi interne (32a) d'une paroi latérale de récipient (32) du corps de récipient (30) et disposé de manière à couvrir une partie du bouchon (50) à un endroit où le couvercle d'ouverture-fermeture (40) s'engage avec la partie du bouchon (50).

2. Machine à pain (1) selon la revendication 1, **caractérisée en ce que** le couvercle d'ouverture-fermeture (40) comprend
un corps de couvercle d'ouverture-fermeture (41) en forme de plaque avec une surface principale (PS1), et
une paroi latérale de couvercle (42) qui s'étend depuis une périphérie externe du corps de couvercle d'ouverture-fermeture (41) dans une direction coupant la surface principale (PS1) du corps de couvercle d'ouverture-fermeture (41), la paroi latérale de couvercle (42) est pourvue d'un trou traversant (44) dans lequel la partie du bouchon (50) est insérée, et
le premier élément de couverture (34) est disposé à une position chevauchant le trou traversant (44) lorsque l'on regarde depuis une direction allant d'une surface de paroi interne (32a) vers une surface de paroi externe (32b) de la paroi latérale de récipient (32).

3. Machine à pain (1) selon la revendication 2, **caractérisée en ce que**
le premier élément de couverture (34) s'étend au-dessus du trou traversant (44) non seulement depuis la surface de paroi interne (32a) de la paroi latérale de récipient (32) vers un côté opposé à un côté sur lequel le bouchon (50) est disposé, mais également vers le corps de couvercle d'ouverture-fermeture (41).

4. Machine à pain (1) selon la revendication 2 ou 3, **caractérisée en ce que**
un espace (SP1) est formé entre le premier élément de couverture (34) et le corps de couvercle d'ouverture-fermeture (41).

5. Machine à pain (1) selon la revendication 1, **caractérisée en ce que**
un boîtier (31) pour loger le bouchon (50) d'une manière rotative est prévu sur une surface de paroi externe (32b) de la paroi latérale de récipient (32) du corps de récipient (30),
le bouchon (50) comprend
une partie d'arbre (51) qui est disposée entre les première et deuxième extrémités (E11, E12) et est maintenue en rotation dans le boîtier (31),
une partie de crochet (52) qui s'étend depuis la partie d'arbre (51) vers la première extrémité et s'engage avec le couvercle d'ouverture-fermeture (40), et
une partie d'actionnement de bouchon (53) qui s'étend de la partie d'arbre (51) vers la deuxième extrémité (E12), et est courbée depuis une direction, dans laquelle la partie de crochet (52) s'étend, vers un côté opposé à un côté où le couvercle d'ouverture-fermeture (40) est disposé, et
lorsque la partie d'actionnement de bouchon (53) tourne autour de la partie d'arbre (51) dans une première direction de libération vers la paroi latérale de récipient (32), la partie de crochet (52) tourne dans une deuxième direction de libération à l'opposé de la paroi latérale de récipient (32) pour libérer l'engagement entre le couvercle d'ouverture-fermeture (40) et la partie de crochet (52).

6. Machine à pain (1) selon la revendication 5, **caractérisée en ce que**
le ou les plusieurs éléments de couverture (34, 60) comprennent un deuxième élément de couverture (60) qui est disposé à proximité de la surface de paroi externe (32b) de la paroi latérale de récipient (32) pour maintenir le bouchon dans le boîtier (31).

7. Machine à pain (1) selon la revendication 6, **caractérisée en ce que**
la partie de crochet (52) est pourvue d'un évidement (55) avec une surface de contact (55a) sur un côté opposé à un côté où la partie de crochet (52) s'engage avec le couvercle d'ouverture-fermeture (40), et
le deuxième élément de couverture (60) comprend une nervure de couverture (63) disposée à une position chevauchant la surface de contact (55a) de l'évidement (55) lorsque l'on regarde depuis une direction allant de la surface de paroi externe (32b) vers la surface de paroi interne (32a) de la paroi latérale de récipient (32).

8. Machine à pain (1) selon la revendication 6 ou 7, **caractérisée en ce que**
la partie d'actionnement de bouchon (53) comprend une nervure de bouchon (56) s'étendant dans une direction de hauteur de la partie d'actionnement de bouchon (64), et
le deuxième élément de couverture (60) comprend une partie de contact de nervure (64) disposée à une position chevauchant la nervure de bouchon (56) lorsque l'on regarde depuis la direction allant de la surface de paroi externe (32b) vers la surface de paroi interne (32a) de la paroi latérale de récipient (32).

9. Machine à pain (1) selon l'une quelconque des revendications 1 à 8, **caractérisée en ce que** le couvercle d'ouverture-fermeture (40) est réalisé en métal.

10. Machine à pain (1) selon l'une quelconque des revendications 1 à 9, **caractérisée en outre par**: un solénoïde (16) avec un plongeur (15) qui se déplace vers le bouchon (50).

11. Machine à pain (1) selon l'une quelconque des revendications 1 à 10, **caractérisée en ce que** le récipient d'ingrédients auxiliaires (20) est disposé au-dessus du récipient de mélange (10).
